# EUROPEAN PATENT APPLICATION

(11) **EP 4 354 922 A1**
(43) Date of publication of application: **17.04.2024**
(21) Application number: 22819476.7
(22) Date of filing: 06.06.2022
(51) Int. Cl.: H04W 12/04

(54) **KEY MATERIAL SENDING METHOD, KEY MATERIAL OBTAINING METHOD, AND INFORMATION TRANSMISSION METHOD AND DEVICE**

(30) Priority: 09.06.2021 CN 202110644691
(71) Applicant: Vivo Mobile Communication Co., Ltd., Dongguan, Guangdong 523863 (CN)
(72) Inventor: ZHANG, Yizhong, Dongguan, Guangdong 523863 (CN); XIE, Zhenhua, Dongguan, Guangdong 523863 (CN)
(74) Representative: Lavoix
(86) International application number: PCT/CN2022/097119
(87) International publication number: WO 2022/257878

(57) **Abstract**

This application discloses a key material sending method, a key material obtaining method, an information transmission method, and a device, which belong to the field of communication technology. The key material sending method in the embodiment of this application includes: receiving, by a first network function, first information, where the first information is used to determine a first mapping relationship between a first terminal and a second terminal; and sending, by the first network function, a key material of the first terminal according to the first mapping relationship; where the key material of the first terminal includes: security information required by the first terminal for communication.

## Description

### CROSS-REFERENCE TO RELATED APPLICATIONS

This application claims priority to Chinese Patent Application No. 202110644691.9, filed on June 9, 2021 in China, which is incorporated herein by reference in its entirety.

### TECHNICAL FIELD

This application belongs to the technical field of communication, and in particular, relates to a key material sending method, a key material obtaining method, an information transmission method, and a device.

### BACKGROUND

With the popularity of the Internet of Things and smart homes, there may be multiple smart homes in one family. Smart home connects various devices in the home (such as audio and video equipment, lighting system, curtain control, air conditioning control, security system) for mutual communication, to form a communication topology network to provide various functions and means such as home appliance control, lighting control, telephone remote control, indoor and outdoor remote control, anti-theft alarm, environmental monitoring, and HVAC control.

In order to utilize the 5^{th} generation (5^{th} Generation, 5G) network services, all devices in the smart home need to access the 5G network during networking in the smart home network. However, many smart IoT devices have only limited functions (also known as restricted functions), and how to provide relevant security materials for these smart IoT devices with limited functions is an urgent problem to be solved.

### SUMMARY

The embodiments of this application provide a key material sending method, a key material obtaining method, an information transmission method, and a device, which can solve the problem of how to provide relevant security materials for smart IoT devices with limited functions.

According to a first aspect, a key material sending method is provided, including:
receiving, by a first network function, first information, where the first information is used to determine a first mapping relationship between a first terminal and a second terminal; and
sending, by the first network function, a key material of the first terminal according to the first mapping relationship;
where the key material of the first terminal includes: security information required by the first terminal for communication.

According to a second aspect, a key material obtaining method is provided, including:
receiving, by a first terminal, a key material of a first terminal determined by a first network function, where the key material of the first terminal includes: security information required by the first terminal for communication.

According to a third aspect, an information transmission method is provided, including:
sending, by a second terminal or a third-party function, first information to a first network function, so that after receiving the first information, the first network function determines that there is a first mapping relationship between a first terminal and the second terminal and sends a key material of the first terminal;
where the key material of the first terminal includes: security information required by the first terminal for communication.

According to a fourth aspect, a key material sending apparatus is provided, including:
a first receiving module, configured to receive first information, where the first information is used to determine a first mapping relationship between a first terminal and a second terminal; and
a first execution module, configured to send a key material of the first terminal according to the first mapping relationship;
where the key material of the first terminal includes: security information required by the first terminal for communication.

According to a fifth aspect, a key material obtaining apparatus is provided, including:
a second receiving module, configured to receive a key material of a first terminal determined by a first network function, where the key material of the first terminal includes: security information required by the first terminal for communication.

According to a sixth aspect, an information transmission apparatus is provided, including:
a first sending module, configured to send first information to a first network function, so that after receiving the first information, the first network function determines that there is a first mapping relationship between a first terminal and the second terminal and sends a key material of the first terminal;
where the key material of the first terminal includes: security information required by the first terminal for communication.

According to a seventh aspect, a communication device is provided, including a processor, a memory, and a program or an instruction stored in the memory and executable on the processor, and when the program or the instruction is executed by the processor, the steps of the method according to the first aspect, the steps of the method according to the second aspect, or the steps of the method according to the third aspect are implemented.

According to an eighth aspect, a communication device is provided, including a processor and a communication interface, where the communication interface is configured to receive first information, where the first information is used to determine a first mapping relationship between a first terminal and a second terminal; and send a key material of the first terminal according to the first mapping relationship; where the key material of the first terminal includes: security information required by the first terminal for communication.

Alternatively, the communication interface is configured to receive the key material of the first terminal determined by the first network function, where the key material of the first terminal includes: the security information required by the first terminal for communication. Alternatively, the communication interface is configured to send the first information to the first network function, so that after receiving the first information, the first network function determines that there is a first mapping relationship between the first terminal and the second terminal, and sends the key material of the first terminal; where the key material of the first terminal includes: the security information required by the first terminal for communication.

According to a ninth aspect, a readable storage medium is provided. The readable storage medium stores a program or an instruction. When the program or the instruction is executed by a processor, the steps of the method according to the first aspect are implemented, the steps of the method according to the second aspect are implemented, or the steps of the method according to the third aspect are implemented.

According to a tenth aspect, a chip is provided, where the chip includes a processor and a communication interface, the communication interface is coupled to the processor, and the processor is configured to run programs or instructions, so as to implement the method according to the first aspect, the method according to the second aspect, or the method according to the third aspect.

According to an eleventh aspect, a computer program/program product is provided, stored in a non-volatile storage medium, the program/program product is executed by at least one processor to implement the steps of the method according to the first aspect, the steps of the method according to the second aspect, or the steps of the method according to the third aspect.

According to a twelfth aspect, a communication device is provided, configured to perform the steps of the method according to the first aspect, or to perform the steps of the method according to the second aspect, or to perform the steps of the method according to the third aspect steps of the method.

In the embodiment of this application, the first core network device receives the first information used to determine the first mapping relationship between the first terminal and the second terminal, and sends the key material of the first terminal according to the first mapping relationship; so that the first terminal can obtain the key material determined by the first core network device for it. Therefore, even if the function of the first terminal is limited, the security of the first terminal in the process of accessing the network can be guaranteed, and this resolves the problem of how to generate related key materials used by home smart devices during networking authorization/authentication.

### BRIEF DESCRIPTION OF DRAWINGS

FIG. 1 is a block diagram of a wireless communication system to which the embodiments of this application can be applied;
FIG. 2 is a flowchart of steps of a key material sending method provided by an embodiment of this application;
FIG. 3 is a schematic diagram of steps of a key material obtaining method provided by an embodiment of this application;
FIG. 4 is a schematic diagram of steps of an information transmission method provided by an embodiment of this application;
FIG. 5 is an interactive schematic diagram of example 1 provided by an embodiment of this application;
FIG. 6 is an interactive schematic diagram of example 2 provided by an embodiment of this application;
FIG. 7 is an interactive schematic diagram of example 3 provided by an embodiment of this application;
FIG. 8 is an interactive schematic diagram of example 4 provided by an embodiment of this application;
FIG. 9 is an interactive schematic diagram of example 5 provided by an embodiment of this application;
FIG. 10 is an interactive schematic diagram of example 6 provided by an embodiment of this application;
FIG. 11 is a schematic structural diagram of a key material sending apparatus provided by an embodiment of this application;
FIG. 12 is a schematic structural diagram of a key material obtaining apparatus provided by an embodiment of this application;
FIG. 13 is a schematic structural diagram of an information transmission apparatus provided by an embodiment of this application;
FIG. 14 is a schematic structural diagram of a communications device provided by an embodiment of this application; and
FIG. 15 is a schematic structural diagram of a terminal provided by an embodiment of this application; and
FIG. 16 is a schematic structural diagram of a network side device provided by an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A new radio (New Radio, NR) system is described in the following description for illustrative purposes, and the NR terminology is used in most of the following description, although these technologies can also be applied to applications other than the NR system application, such as the 6^{th} generation (6^{th} Generation, 6G) communication system.

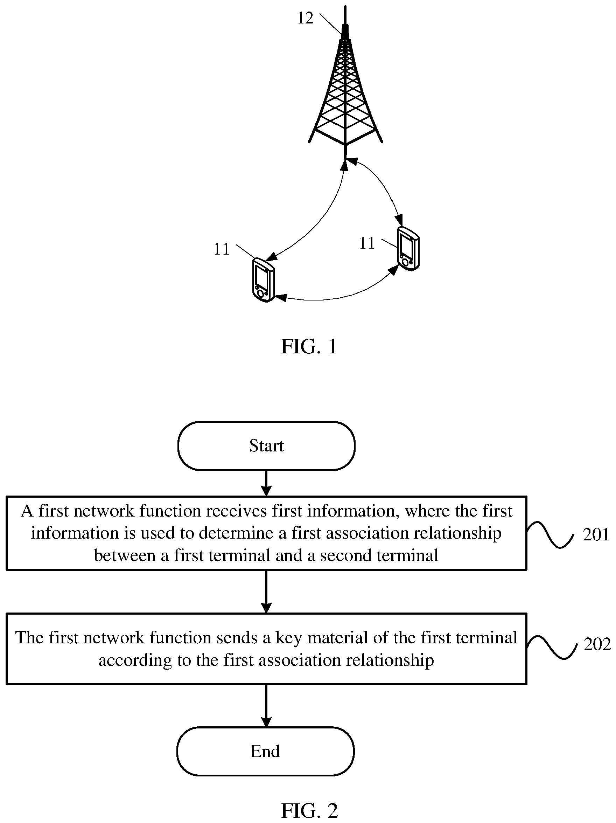

FIG. 1 is a block diagram of a wireless communication system to which embodiments of this application can be applied. The wireless communication system includes a terminal 11 and a network side device 12. The terminal 11 may also be called a terminal device or user equipment (User Equipment, UE), and the terminal 11 may be a mobile phone, a tablet personal computer (Tablet Personal Computer), a laptop computer (Laptop Computer) or a notebook computer, a personal digital Assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device) or a vehicle-mounted device (Vehicle User Equipment, VUE), a pedestrian terminal (Pedestrian User Equipment, PUE), and other terminal side devices. The wearable device includes: smart watches, bracelets, earphones, glasses, etc. It should be noted that a specific type of the terminal 11 is not limited in the embodiments of this application. The network side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (Evolved Node B, eNB), a home node B, a home evolved node B, a wireless local area network (Wireless Local Area Network, WLAN) access point, a wireless fidelity (Wireless Fidelity, WiFi) node, a transmitting receiving point (Transmitting Receiving Point, TRP), or other appropriate terms in the art. As long as a same technical effect is achieved, the base station is not limited to a specified technical term. It should be noted that, in embodiments of this application, only a base station in the NR system is used as an example, but a specific type of the base station is not limited.

The key material sending method, the key material obtaining method, the information transmission method, and the device provided in the embodiments of this application will be described in detail below through some embodiments and application scenarios with reference to the accompanying drawings.

As shown in FIG. 2, at least one embodiment of this application provides a key material sending method, executed by a first network function, including:
Step 201: A first network function receives first information, where the first information is used to determine a first mapping relationship between a first terminal and a second terminal.
Step 202: The first network function sends a key material of the first terminal according to the first mapping relationship.

The key material of the first terminal includes: security information required by the first terminal for communication.

It should be noted that the first network function may be an access network function or a core network function, which is not specifically limited herein.

In this embodiment of this application, the first network function receives the first information, determines that there is a first mapping relationship between the first terminal and the second terminal, and then generates and sends the key material of the first terminal based on the first mapping relationship.

In an optional embodiment, the first information includes at least one of the following:
a first identifier; where the first identifier is a device identifier and/or a user identifier of the first terminal; and the first identifier can uniquely identify the first terminal; and
a second identifier; where the second identifier is a device identifier and/or a user identifier of the second terminal; and the second identifier can uniquely identify the second terminal.

As an optional embodiment, the method further includes at least one of the following:
determining, by the first network function according to the first information, that there is the first mapping relationship between the first terminal and the second terminal; for example, the first information includes the first identifier and the second identifier, and then the first network function determines that there is the first mapping relationship between the first terminal and the second terminal; for another example, the first information is sent by the first terminal and the first information only includes the second identifier, and then the first network function may also determine that there is the first mapping relationship between the first terminal and the second terminal; and

The first network function determines, according to a pre-stored mapping relationship and the first information, that there is the first mapping relationship between the first terminal and the second terminal; where the "pre-stored mapping relationship" may be locally stored in the first network function or stored in third-party functions. For example, the first terminal sends the first information, where the first information is the second identifier, and the first network function obtains the first mapping relationship through local storage.

As an optional embodiment, if the first information does not include the first identifier, the method further includes:
sending, by the first network function, the first identifier of the first terminal to the first terminal. For example, the first identifier is determined by the first network function or a third-party function, which is not specifically limited herein.

As an optional embodiment, the first mapping relationship includes at least one of the following:
an mapping relationship between a device identifier of the first terminal and a device identifier of the second terminal;
an mapping relationship between a device identifier of the first terminal and a user identifier of the second terminal;
an mapping relationship between a user identifier of the first terminal and a user identifier of the second terminal; and
an mapping relationship between a user identifier of the first terminal and a device identifier of the second terminal.

As another optional embodiment, the security information includes at least one of the following:
a security key;
a security parameter; and
signing credential information, for example, the signing credential information includes at least one of the following:
   signing credential long-term key;
   a user identifier;
   a UE route selection policy (URSP); and
   a key set identifier in 5G (Key Set Identifier in 5G, ngKSI).

In at least one embodiment of this application, the method further includes:
deriving, by the first network function, the key material of the first terminal based on a key material of the second terminal;
where the key material of the second terminal includes: security information required by the second terminal for communication.

In at least one embodiment of this application, the receiving first information in step 201 includes at least one of the following:
receiving, by the first network function, the first information sent by the first terminal;
receiving, by the first network function, the first information sent by the second terminal;
receiving, by the first network function, the first information sent by a third-party function; for example, the third-party function is an application server, and the third-party function can be set as a separate entity or can be a module or a unit set on another network entity, which is not specifically limited herein;
receiving, by the first network function, the first information through a network exposure function (Network Exposure Function, NEF); and
receiving, by the first network function, the first information through a non-access stratum (Non Access Stratum, NAS) message.

Optionally, the NAS message is at least one of the following: a service request message; a registration request message; and a protocol data unit (Protocol Data Unit, PDU) session establishment request message.

In at least one optional embodiment of this application, before the first network function sends the key material of the first terminal, the method further includes:
sending an inquiry indication to the second terminal; for example, the inquiry indication may be: bit information, a non-access stratum NAS message (for example, a configuration update command or a PDU session modification message), and a new non-access stratum NAS message; and
receiving an authorization indication sent by the second terminal; for example, the authorization indication may be: a success or failure indication (ACK/NACK), bit information, a non-access stratum NAS message (for example, a service request message or a PDU session modification message), or a new non-access stratum NAS message;

Correspondingly, in step 202, the sending, by the first network function, the key material of the first terminal includes:
sending, by the first network function, the key material of the first terminal according to the authorization indication. In other words, in this optional embodiment, the first network function can send the key material of the first terminal only after receiving the authorization indication from the second terminal.

As an optional embodiment, in step 202, the sending, by the first network function, the key material of the first terminal includes any one of the following:
sending, by the first network function, the key material of the first terminal to the first terminal;
sending, by the first network function, the key material of the first terminal to the second terminal, and sending the key material of the first terminal to the first terminal through the second terminal; in this case, the first terminal and the second terminal need to establish direct connection communication, and the first information and the key material of the first terminal are transmitted through the direct connection communication; and
sending, by the first network function, the key material of the first terminal to a third-party function, and sending the key material of the first terminal to the first terminal through the third-party function; for example, the third-party function is an application server.

As an optional embodiment, the method further includes at least one of the following:
starting, by the first network function, a first timer, where a timing period of the first timer is a valid time of the security information of the first terminal; and after the valid time is exceeded, the security information of the first terminal becomes invalid.

It should be noted that an existing timer can be reused as the first timer, and relevant parameters of the first timer (such as a start occasion and a timing period) can be obtained by both the first terminal and the first network function.

Optionally, the key material further includes: a valid time, where the valid time is the valid time of the security information. After the valid time is exceeded, the security information becomes invalid.

As another optional embodiment, before sending the key material of the first terminal in step 202, the method further includes:
receiving, by the first network function, the key material of the first terminal from a second network function.

For example, the first network function is an access and mobility management function (Access and Mobility Management Function, AMF) or a radio access network (Radio Access Network, RAN), and the second network function is an AMF or an authentication server function (Authentication Server Function, AUSF).

To sum up, in the embodiment of this application, the first core network device receives the first information used to determine the first mapping relationship between the first terminal and the second terminal, and sends the key material of the first terminal according to the first mapping relationship; so that the first terminal can obtain the key material determined by the first core network device for it. Therefore, even if the function of the first terminal is limited, the security of the first terminal in the process of accessing the network can be guaranteed, and this resolves the problem of how to generate related key materials used by home smart devices during networking authorization/authentication.

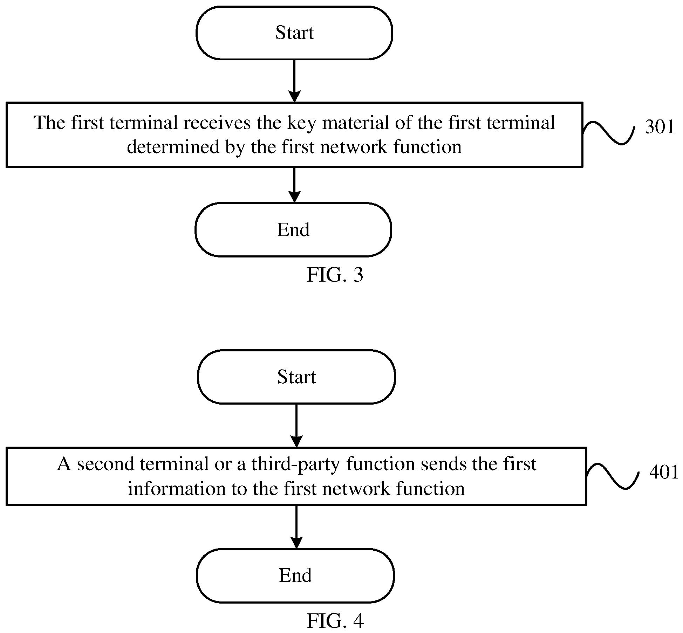

As shown in FIG. 3, the embodiment of this application also provides a key material obtaining method, executed by a first terminal, including:
Step 301: A first terminal receives a key material of a first terminal determined by a first network function, where the key material of the first terminal includes: security information required by the first terminal for communication.

It should be noted that the first network function is an access network function or a core network function, which is not specifically limited herein.

As an optional embodiment, the key material of the first terminal is obtained by deriving a key material of the second terminal;
where the key material of the second terminal includes: security information required by the second terminal for communication.

As another optional embodiment, the security information includes at least one of the following:
a security key;
a security parameter; and
signing credential information, for example, the signing credential information includes at least one of the following:
   signing credential long-term key;
   a user identifier;
   a UE route selection policy (UE Route Selection Policy, URSP); and
   a key set identifier in 5G (Key Set Identifier in 5G, ngKSI).

As an optional embodiment, before step 301, the method further includes:

The first terminal sends an initial verification message to the third-party function, where the initial verification message is used for the third-party function to verify and authorize the first terminal.

The initial verification message includes at least one of the following:
an identifier of the first terminal; where the identifier can uniquely identify the first terminal;
a default credential of the first terminal; where the default credential is the only credential that can be identified and can verify security before the first terminal accesses a bearer (bearer); and
a network identifier of a local network of the first terminal, where the network identifier of the local network is a non-public network identifier different from that of a public land mobile network (Public Land Mobile Network, PLMN).

In at least one optional embodiment of this application, step 301 includes any one of the following:
receiving, by the first terminal, the key material of the first terminal sent by the first network function; that is, the first network function directly gives the key material of the first terminal to the first terminal;
receiving, by the first terminal, the key material of the first terminal sent by the second terminal, where the key material of the first terminal is sent to the second terminal by the first network function; that is, the first network function sends the key material of the first terminal to the second terminal, so that the second terminal forwards the key material of the first terminal to the first terminal; in this case, the first terminal and the second terminal need to establish direct connection communication; and
receiving, by the first terminal, the key material of the first terminal sent by a third-party function, where the key material of the first terminal is sent by the first network function to the third-party function; that is, the first network function sends the key material of the first terminal to the third-party function; so that the third-party function forwards the key material of the first terminal to the first terminal. For example, the third-party function is an application server, and the third-party function can be set as a separate entity or can be a module or a unit set on another network entity, which is not specifically limited herein.

As an optional embodiment, the key material further includes:
a valid time, where the valid time is the valid time of the security information. After the valid time is exceeded, the security information becomes invalid.

As another optional embodiment, the method further includes:
after the valid time is exceeded, sending, by the first terminal, first update indication information to the first network function, where the first update indication information is used to indicate the first network function to update the key material of the first terminal.

To sum up, in the embodiment of this application, the first core network device receives the first information used to determine the first mapping relationship between the first terminal and the second terminal, and sends the key material of the first terminal according to the first mapping relationship; so that the first terminal can obtain the key material determined by the first core network device for it. Therefore, even if the function of the first terminal is limited, the security of the first terminal in the process of accessing the network can be guaranteed, and this resolves the problem of how to generate related key materials used by home smart devices during networking authorization/authentication.

As shown in FIG. 4, the embodiment of this application further provides an information transmission method, including:
Step 401: A second terminal or a third-party function sends first information to a first network function, so that after receiving the first information, the first network function determines that there is a first mapping relationship between a first terminal and the second terminal and sends a key material of the first terminal.

The key material of the first terminal includes: security information required by the first terminal for communication.

In the embodiment of this application, the third-party function or the second terminal sends the first information to the first network function, and the first network function determines that there is a first mapping relationship between the first terminal and the second terminal, and then the first network function generates and sends the key material of the first terminal. In other words, the first information implicitly indicates the first network function to generate the key material of the first terminal.

It should be noted that the third-party function is an application server, and the third-party function can be set as a separate entity or can be a module or a unit set on another network entity.

In an optional embodiment, the first information includes at least one of the following:
a first identifier; where the first identifier is a device identifier and/or a user identifier of the first terminal; and
a second identifier; where the second identifier is a device identifier and/or a user identifier of the second terminal.

In an optional embodiment, after step 401, the method further includes:
receiving, by the second terminal or the third-party function, the key material of the first terminal sent by the first network function and determined by the first network function; and
sending, by the second terminal or the third-party function, the key material of the first terminal to the first terminal, where in at least one optional embodiment of this application, the key material of the first terminal is derived based on a key material of the second terminal;
where the key material of the second terminal includes: security information required by the second terminal for communication.

In at least one optional embodiment of this application, the method further includes:
receiving, by the second terminal, an inquiry indication sent by the first network function; for example, the inquiry indication may be: bit information, a non-access stratum NAS message (for example, a configuration update command or a PDU session modification message), and a new non-access stratum NAS message; and
sending, by the second terminal, an authorization indication to the first network function; for example, the authorization indication may be: a success or failure indication (ACK/NACK), bit information, a non-access stratum NAS message (for example, a service request message or a PDU session modification message), or a new non-access stratum NAS message. In this optional embodiment, the first network function can send the key material of the first terminal only after receiving the authorization indication from the second terminal.

As an optional embodiment, before step 401, the method further includes:
receiving, by the third-party function, an initial verification message sent by the first terminal, where the initial verification message is used for the third-party function to verify and authorize the first terminal.

The initial verification message includes at least one of the following:
an identifier of the first terminal; where the identifier can uniquely identify the first terminal;
a default credential of the first terminal; where the default credential is the only credential that can be identified and can verify security before the first terminal accesses a bearer (bearer); and
a network identifier of a local network of the first terminal, where the network identifier of the local network is a non-public network identifier different from that of a public land mobile network (Public Land Mobile Network, PLMN).

To sum up, in the embodiment of this application, the first core network device receives the first information used to determine the first mapping relationship between the first terminal and the second terminal, and sends the key material of the first terminal according to the first mapping relationship; so that the first terminal can obtain the key material determined by the first core network device for it. Therefore, even if the function of the first terminal is limited, the security of the first terminal in the process of accessing the network can be guaranteed, and this resolves the problem of how to generate related key materials used by home smart devices during networking authorization/authentication.

In order to describe the method provided by the embodiment of this application more clearly, several examples are used for description below.

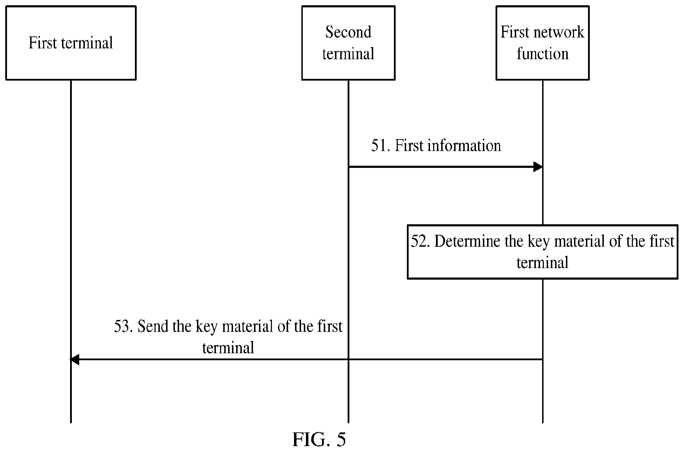

Example 1: the second terminal sends the first information, to indicate the first network function to generate the key material of the first terminal; as shown in FIG. 5:
Step 51: The second terminal sends the first information to the first network function.
Step 52: The first network function determines the key material of the first terminal according to the first mapping relationship between the first terminal and the second terminal.
Step 53: The first network function sends the key material of the first terminal to the first terminal.

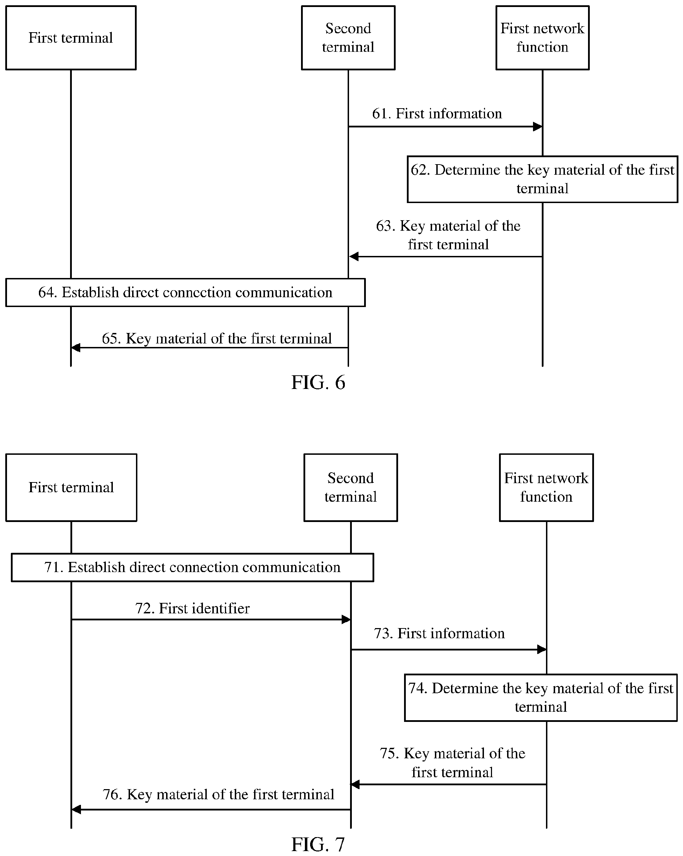

Example 2: the second terminal sends the first information, to indicate the first network function to generate the key material of the first terminal; the first terminal and the second terminal establish direct connection communication, and the first terminal receives the key material of the first terminal through the direct connection communication. As shown in FIG. 6, the following steps are included.

Step 61: The second terminal sends the first information to the first network function.

Step 62: The first network function determines the key material of the first terminal according to the first mapping relationship between the first terminal and the second terminal.

Step 63: The first network function sends the key material of the first terminal to the second terminal.

Step 64: The first terminal establishes direct connection communication with the second terminal.

Step 65: The second terminal sends the key material of the first terminal to the first terminal through direct connection communication.

Example 3: the first terminal and the second terminal establish a direct connection communication, the first terminal sends the first identifier through the direct connection communication, and the second terminal sends the first information, to indicate the first network function to generate the key material of the first terminal; as shown in FIG. 7:
Step 71: The first terminal establishes direct connection communication with the second terminal.
Step 72: The first terminal sends the first identifier to the second terminal through direct connection communication.
Step 73: The second terminal sends the first information to the first network function according to the first identifier.
Step 74: The first network function determines the key material of the first terminal according to the first mapping relationship between the first terminal and the second terminal.
Step 75: The first network function sends the key material of the first terminal to the second terminal.
Step 76: The second terminal sends the key material of the first terminal to the first terminal through direct connection communication.

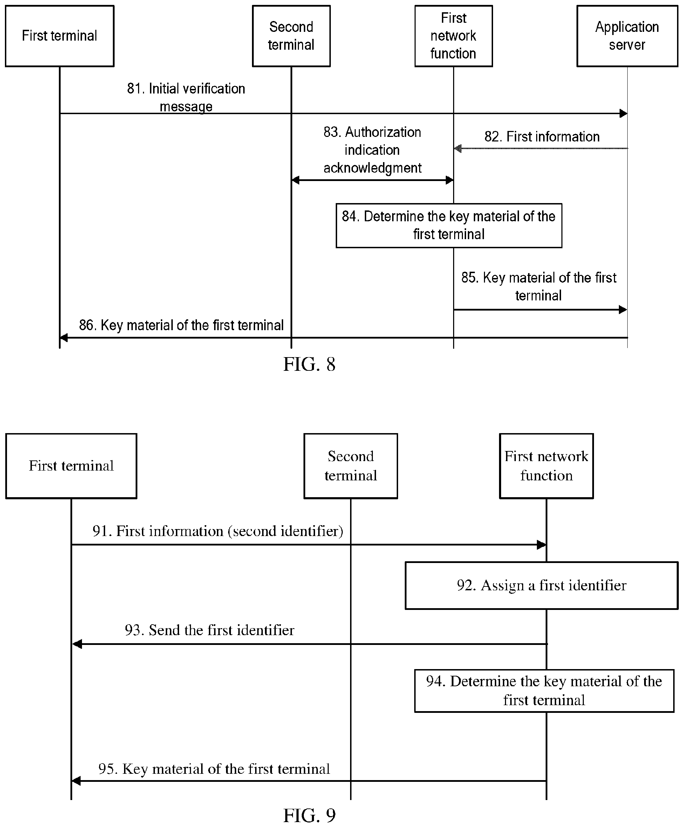

Example 4: the application server (that is, the third-party function) sends the first information, to indicate the first network function to generate the key material of the first terminal; as shown in FIG. 8:
Step 81 (optional): The first terminal sends an initial verification message to the application server, so that the application server implements verification and authorization of the first terminal.
Step 82: The application server sends the first information to the first network function.
Step 83 (optional): The first network function performs authorization indication acknowledgment with the second terminal.
Step 84: After receiving an authorization indication acknowledgment from the second terminal, the first network function determines the key material of the first terminal according to the first mapping relationship between the first terminal and the second terminal.
Step 85: The first network function sends the key material of the first terminal to the application server.
Step 86: The application server sends the key material of the first terminal to the first terminal.

Example 5, the first information is sent by the first terminal, and the first information includes the second identifier; as shown in FIG. 9:
Step 91: The first terminal sends the first information to the first network function; where the first information includes the second identifier.
Step 92: The first network function assigns the first identifier to the first terminal.
Step 93: The first network function sends the first identifier to the first terminal.
Step 94: After the first network function determines that there is a first mapping relationship between the first terminal and the second terminal, determine a key material of the first terminal.
Step 95: The first network function sends the key material of the first terminal to the first terminal.

It should be noted that there is no absolute sequence of step 93, step 94 and step 95. Optionally, step 93 and step 95 may be performed together or separately, which is not specifically limited herein.

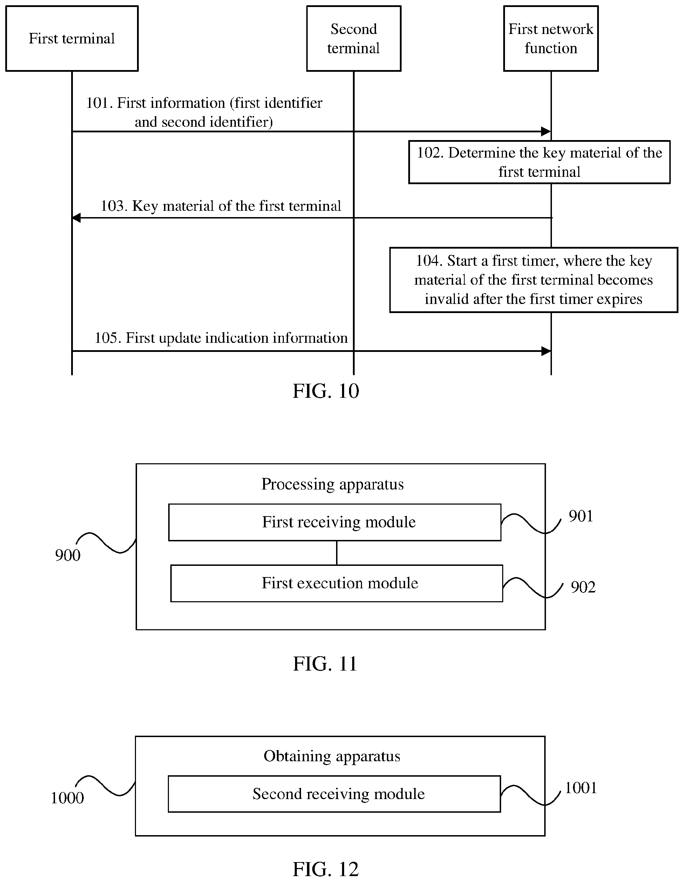

Example 5: the first terminal sends the first information, to indicate the first network function to generate the key material of the first terminal; as shown in FIG. 10:
Step 101: The first terminal sends first information to the first network function; where the first information includes a first identifier and a second identifier.
Step 102: After the first network function determines the first mapping relationship according to the first information and network configuration, determine a key material of the first terminal.
Step 103: The first network function sends the key material of the first terminal to the first terminal.
Step 104: The first network function starts a first timer, where the key material of the first terminal becomes invalid after the first timer expires.
Step 105: After a valid time is exceeded, the first terminal sends first update indication information to the first network function, to indicate the first network function to update the key material of the first terminal.

It should be noted that, for the method provided in the embodiment of this application, the execution subject may be an apparatus, or a control module in the apparatus for executing the method. In the embodiment of this application, the apparatus executing the method is taken as an example to describe the apparatus provided in the embodiment of this application.

As shown in FIG. 11, the embodiment of this application also provides a key material sending apparatus 900, including:
a first receiving module 901, configured to receive first information, where the first information is used to determine a first mapping relationship between a first terminal and a second terminal; and
a first execution module 902, configured to send a key material of the first terminal according to the first mapping relationship.

The key material of the first terminal includes: security information required by the first terminal for communication.

In an optional embodiment, the first information includes at least one of the following:
a first identifier; where the first identifier is a device identifier and/or a user identifier of the first terminal; and
a second identifier; where the second identifier is a device identifier and/or a user identifier of the second terminal.

As an optional embodiment, if the first information does not include the first identifier, the apparatus further includes:
an identifier sending module, configured to send the first identifier of the first terminal to the first terminal.

As an optional embodiment, the apparatus further includes at least one of the following:
a first determining submodule, configured to determine, according to the first information, that there is a first mapping relationship between the first terminal and the second terminal; and
a second determining submodule, configured to determine, according to a pre-stored mapping relationship and the first information, that there is a first mapping relationship between the first terminal and the second terminal.

As an optional embodiment, the first mapping relationship includes at least one of the following:
an mapping relationship between a device identifier of the first terminal and a device identifier of the second terminal;
an mapping relationship between a device identifier of the first terminal and a user identifier of the second terminal;
an mapping relationship between a user identifier of the first terminal and a user identifier of the second terminal; and
an mapping relationship between a user identifier of the first terminal and a device identifier of the second terminal.

As an optional embodiment, the first mapping relationship is obtained through at least one of the following:
obtaining the first mapping relationship according to first information, where the first information indicates the first mapping relationship; and
obtaining, by the first network function, the first mapping relationship according to configuration.

As an optional embodiment, the security information includes at least one of the following:
a security key;
a security parameter; and
signing credential information.

In an optional embodiment, the apparatus further includes:
a derivation module, configured to derive the key material of the first terminal according to a key material of the second terminal;
where the key material of the second terminal includes: security information required by the second terminal for communication.

As an optional embodiment, the first receiving module includes at least one of the following:
a first receiving submodule, configured to receive the first information sent by the first terminal;
a second receiving submodule, configured to receive the first information sent by the second terminal;
a third receiving submodule, configured to receive the first information sent by a third-party function;
a fourth receiving submodule, configured to receive the first information through a network exposure function; and
a fifth receiving submodule, configured to receive the first information through a non-access stratum message.

In an optional embodiment, the apparatus further includes:
an inquiry sending module, configured to send an inquiry indication to the second terminal; and
an authorization receiving module, configured to receive an authorization indication sent by the second terminal.

The first execution module includes:
a material sending submodule, configured to send the key material of the first terminal according to the authorization indication.

As an optional embodiment, the first execution module includes any one of the following:
a first sending submodule, configured to send the key material of the first terminal to the first terminal;
a second sending submodule, configured to send the key material of the first terminal to a second terminal, and send the key material of the first terminal to the first terminal through the second terminal; and
a third sending submodule, configured to send the key material of the first terminal to a third-party function, and send the key material of the first terminal to the first terminal through the third-party function.

As an optional embodiment, the apparatus further includes any one of the following:
a timing processing module, configured to start a first timer, where a timing period of the first timer is a valid time of the security information of the first terminal; and after the valid time is exceeded, the security information of the first terminal becomes invalid.

As an optional embodiment, the key material further includes:
a valid time, where the valid time is the valid time of the security information.

In an optional embodiment, the apparatus further includes:
a material receiving module, configured to receive the key material of the first terminal from the second network function.

In the embodiment of this application, the first core network device receives the first information used to determine the first mapping relationship between the first terminal and the second terminal, and sends the key material of the first terminal according to the first mapping relationship; so that the first terminal can obtain the key material determined by the first core network device for it. Therefore, even if the function of the first terminal is limited, the security of the first terminal in the process of accessing the network can be guaranteed, and this resolves the problem of how to generate related key materials used by home smart devices during networking authorization/authentication.

It should be noted that the key material sending apparatus provided in the embodiment of this application is an apparatus capable of executing the above key material sending method, and all the embodiments of the above key material sending method are applicable to this apparatus, and can achieve the same or similar beneficial effects.

As shown in FIG. 12, the embodiment of this application also provides a key material obtaining apparatus 1000, including:
a second receiving module 1001, configured to receive a key material of a first terminal determined by a first network function, where the key material of the first terminal includes: security information required by the first terminal for communication.

As an optional embodiment, the key material of the first terminal is obtained by deriving a key material of the second terminal;
where the key material of the second terminal includes: security information required by the second terminal for communication.

As an optional embodiment, the security information includes at least one of the following:
a security key;
a security parameter; and
signing credential information.

In an optional embodiment, the apparatus further includes:
a verification sending module, configured to send an initial verification message to the third-party function, where the initial verification message is used for the third-party function to verify and authorize the first terminal.

As an optional embodiment, the initial verification message includes at least one of the following:
an identifier of the first terminal;
a default credential of the first terminal; and
a network identifier of a local network of the first terminal.

As an optional embodiment, the second receiving module includes any one of the following:
a sixth receiving submodule, configured to receive the key material of the first terminal sent by the first network function;
a seventh receiving submodule, configured to receive the key material of the first terminal sent by the second terminal, where the key material of the first terminal is sent to the second terminal by the first network function; and
an eighth receiving submodule, configured to receive the key material of the first terminal sent by a third-party function, where the key material of the first terminal is sent to the third-party function by the first network function.

As an optional embodiment, the key material of the second terminal includes: security information required by the second terminal for communication.

In an optional embodiment, the apparatus further includes:
a first update module, configured to: after the valid time is exceeded, send first update indication information to the first network function, where the first update indication information is used to indicate the first network function to update the key material of the first terminal.

In the embodiment of this application, the first core network device receives the first information used to determine the first mapping relationship between the first terminal and the second terminal, and sends the key material of the first terminal according to the first mapping relationship; so that the first terminal can obtain the key material determined by the first core network device for it. Therefore, even if the function of the first terminal is limited, the security of the first terminal in the process of accessing the network can be guaranteed, and this resolves the problem of how to generate related key materials used by home smart devices during networking authorization/authentication.

It should be noted that the key material obtaining apparatus provided in the embodiment of this application is an apparatus capable of executing the above key material obtaining method, and all the embodiments of the above key material obtaining method are applicable to this apparatus, and can achieve the same or similar beneficial effects.

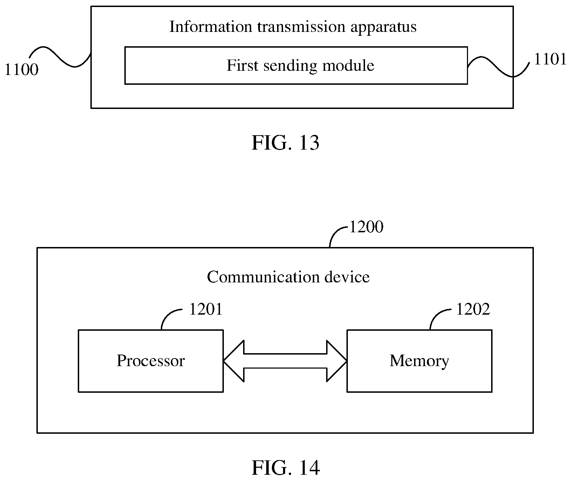

As shown in FIG. 13, the embodiment of this application further provides an information transmission apparatus 1100, including:
a first sending module 1101, configured to send first information to a first network function, so that after receiving the first information, the first network function determines that there is a first mapping relationship between a first terminal and the second terminal and sends a key material of the first terminal.

The key material of the first terminal includes: security information required by the first terminal for communication.

In an optional embodiment, the first information includes at least one of the following:
a first identifier; where the first identifier is a device identifier and/or a user identifier of the first terminal; and
a second identifier; where the second identifier is a device identifier and/or a user identifier of the second terminal.

In an optional embodiment, the apparatus further includes:
a third receiving module, configured to receive the key material of the first terminal determined by the first network function and sent by the first network function; and
a second sending module, configured to send the key material of the first terminal to the first terminal.

As an optional embodiment, the key material of the first terminal is obtained by deriving a key material of the second terminal;
where the key material of the second terminal includes: security information required by the second terminal for communication.

In an optional embodiment, the apparatus further includes:
an inquiry receiving module, configured to receive an inquiry indication sent by the first network function; and
an authorization sending module, configured to send an authorization indication to the first network function.

In an optional embodiment, the apparatus further includes:
a verification module, configured to receive an initial verification message sent by the first terminal, where the initial verification message is used for the third-party function to verify and authorize the first terminal.

As an optional embodiment, the initial verification message includes at least one of the following:
an identifier of the first terminal;
a default credential of the first terminal; and
a network identifier of a local network of the first terminal.

In the embodiment of this application, the first core network device receives the first information used to determine the first mapping relationship between the first terminal and the second terminal, and sends the key material of the first terminal according to the first mapping relationship; so that the first terminal can obtain the key material determined by the first core network device for it. Therefore, even if the function of the first terminal is limited, the security of the first terminal in the process of accessing the network can be guaranteed, and this resolves the problem of how to generate related key materials used by home smart devices during networking authorization/authentication.

It should be noted that the information transmission apparatus provided in the embodiment of this application is an apparatus capable of executing the above information transmission method, and all the embodiments of the above information transmission method are applicable to the apparatus, and can achieve the same or similar beneficial effects.

The sending apparatus, the obtaining apparatus or the information transmission apparatus in the embodiment of this application may be an apparatus, an apparatus with an operating system or an electronic device, or it may be a component, an integrated circuit, or a chip in a terminal. The apparatus or electronic device may be a mobile terminal, or a non-mobile terminal. Exemplarily, mobile terminals may include, but are not limited to, the types of terminals 11 listed above, and non-mobile terminals may be servers, network attached storage (Network Attached Storage, NAS), personal computers (personal computers, PCs), televisions (television, TV), teller machines or self-service machines, etc., which are not specifically limited in this embodiment of this application.

The sending apparatus, the obtaining apparatus or the information transmission apparatus according to embodiments of the present disclosure can implement the processes in the method embodiments in FIG. 1 to FIG. 8, and achieve the same technical effect. To avoid duplication, details are not described herein again.

Optionally, as shown in FIG. 14, an embodiment of this application further provides a communication device 1200, including a processor 1201, a memory 1202, and a program or an instruction stored in the memory 1202 and executable on the processor 1201. For example, when the communication device 1200 is a first network function, when the program or instruction is executed by the processor 1201, each process of the embodiment of the foregoing key material sending method is performed, and the same technical effect can be achieved. When the communication device 1200 is the first terminal, when the program or instruction is executed by the processor 1201, each process of the above embodiment of the key material obtaining method can be performed, and the same technical effect can be achieved. When the communication device 1200 is a second terminal or a third-party function, when the program or instruction is executed by the processor 1201, each process of the above embodiment of the information transmission method can be achieved, and the same technical effect can be achieved. To avoid repetition, it is not repeated here repeat.

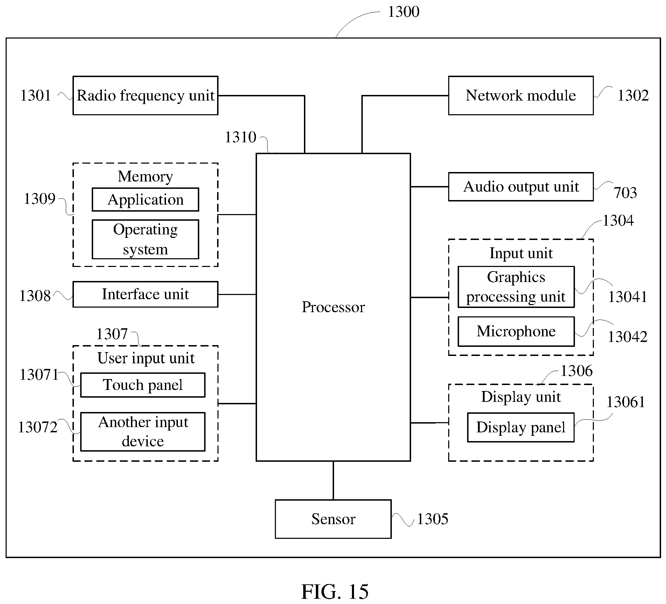

The embodiment of this application also provides a terminal, including a processor and a communication interface, such as a first terminal. The communication interface is configured to receive the key material of the first terminal determined by the first network function, where the key material of the first terminal includes: the security information required by the first terminal for communication. The communication interface is configured to send the first information to the first network function, so that after receiving the first information, the first network function determines that there is a first mapping relationship between the first terminal and the second terminal, and sends the key material of the first terminal; where the key material of the first terminal includes: the security information required by the first terminal for communication. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 15 is a schematic diagram of a hardware structure of a terminal according to an embodiment of this application.

A terminal 1300 includes but is not limited to at least a part of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art can understand that the terminal 1300 may further include a power supply (such as a battery) that supplies power to each component. The power supply may be logically connected to the processor 1310 by using a power supply management system, to implement functions such as charging and discharging management, and power consumption management by using the power supply management system. The terminal structure shown in FIG. 15 constitutes no limitation on the terminal, and the terminal may include more or fewer components than those shown in the figure, or combine some components, or have different component arrangements. Details are not described herein.

It should be understood that, in this embodiment of this application, the input unit 1304 may include a graphics processing unit (Graphics Processing Unit, GPU) 13041 and a microphone 13042, and the graphics processing unit 13041 processes image data of a still picture or a video obtained by an image capture apparatus (such as a camera) in a video capture mode or an image capture mode. The display unit 1306 may include a display panel 13061. Optionally, the display panel 13061 may be configured in a form such as a liquid crystal display or an organic light-emitting diode. The user input unit 1307 includes a touch panel 13071 and another input device 13072. The touch panel 13071 is also referred to as a touchscreen. The touch panel 13071 may include two parts: a touch detection apparatus and a touch controller. The another input device 13072 may include but is not limited to a physical keyboard, a functional button (such as a volume control button or a power on/off button), a trackball, a mouse, and a joystick. Details are not described herein.

In this embodiment of this application, the radio frequency unit 1301 receives downlink data from a network side device and then sends the downlink data to the processor 1310 for processing; and sends uplink data to the network side device. Usually, the radio frequency unit 1301 includes but is not limited to an antenna, at least one amplifier, a transceiver, a coupler, a low noise amplifier, a duplexer, and the like.

The memory 1309 may be configured to store a software program or an instruction and various data. The memory 1309 may mainly include a program or instruction storage area and a data storage area. The program or instruction storage area may store an operating system, and an application or an instruction required by at least one function (for example, a sound playing function or an image playing function). In addition, the memory 1309 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1310 may include one or more processing units. Optionally, an application processor and a modem processor may be integrated into the processor 1310. The application processor mainly processes an operating system, a user interface, an application, an instruction, or the like. The modem processor mainly processes wireless communication, for example, a baseband processor. It can be understood that, alternatively, the modem processor may not be integrated into the processor 1310.

The radio frequency unit 1301 is configured to receive a key material of a first terminal determined by a first network function, where the key material of the first terminal includes: security information required by the first terminal for communication.

Alternatively, the radio frequency unit 1301 is configured to send first information to a first network function, so that after receiving the first information, the first network function determines that there is a first mapping relationship between a first terminal and the second terminal and sends a key material of the first terminal.

The key material of the first terminal includes: security information required by the first terminal for communication.

In the embodiment of this application, the first core network device receives the first information used to determine the first mapping relationship between the first terminal and the second terminal, and sends the key material of the first terminal according to the first mapping relationship; so that the first terminal can obtain the key material determined by the first core network device for it. Therefore, even if the function of the first terminal is limited, the security of the first terminal in the process of accessing the network can be guaranteed, and this resolves the problem of how to generate related key materials used by home smart devices during networking authorization/authentication.

The embodiment of this application also provides a network side device, such as a first network function, including a processor and a communication interface. The communication interface is configured to receive the first information, where the first information is used to determine a first mapping relationship between the first terminal and the second terminal. The processor is further configured to send the key material of the first terminal through the communication interface according to the first mapping relationship; where the key material of the first terminal includes: security information required by the first terminal for communication. This network side device embodiment corresponds to the foregoing method embodiment on the network side device. Each implementation process and implementation of the foregoing method embodiment may be applicable to this network side device embodiment, and a same technical effect can be achieved.

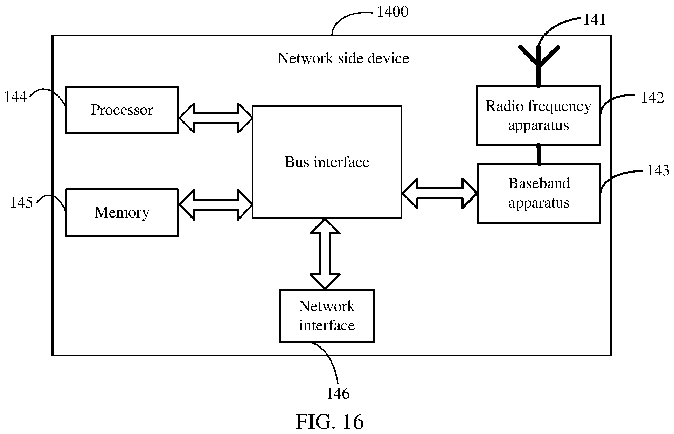

Specifically, an embodiment of this application further provides a network side device. As shown in FIG. 16, a network device 1400 includes an antenna 141, a radio frequency apparatus 142, and a baseband apparatus 143. The antenna 141 is connected to the radio frequency apparatus 142. In an uplink direction, the radio frequency apparatus 142 receives information by using the antenna 141, and sends the received information to the baseband apparatus 143 for processing. In a downlink direction, the baseband apparatus 143 processes to-be-sent information, and sends the information to the radio frequency apparatus 142. The radio frequency apparatus 142 processes the received information and then sends the information by using the antenna 141.

The foregoing radio frequency apparatus may be located in the baseband apparatus 143, and the method performed by the network side device in the foregoing embodiment may be implemented in the baseband apparatus 143. The baseband apparatus 143 includes a processor 144 and a memory 145.

The baseband apparatus 143 may include, for example, at least one baseband board, where a plurality of chips are disposed on the baseband board. As shown in FIG. 16, one chip is, for example, the processor 144, which is connected to the memory 145, so as to invoke a program in the memory 145 to perform operations of the network device shown in the foregoing method embodiment.

The baseband device 143 may further include a network interface 146 for exchanging information with the radio frequency device 142, and the interface is, for example, a common public radio interface (common public radio interface, CPRI for short).

Specifically, the network side device in this embodiment of the present invention further includes an instruction or a program that is stored in the memory 145 and that can be run on the processor 144. The processor 144 invokes the instruction or the program in the memory 145 to perform the method performed by the modules shown in FIG. 16, and a same technical effect is achieved. To avoid repetition, details are not described herein again.

The embodiments of this application also provide a readable storage medium, the readable storage medium may be nonvolatile or volatile, and a program or instruction is stored on the readable storage medium, and when the program or instruction is executed by the processor, the processes of the above embodiment of the key material sending method or the embodiment of the key material obtaining method or the embodiment of the information transmission method, and the same technical effect can be achieved. To avoid repetition, details are not repeated herein.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, an optical disc, or the like.

The embodiments of this application further provide a computer program product, the computer program product is stored in a non-transient storage medium, and the computer program product is executed by at least one processor to implement the processes of the above embodiment of the key material sending method or the embodiment of the key material obtaining method or the embodiment of the information transmission method, and the same technical effects can be achieved. To avoid repetition, details are not described herein again.

An embodiment of this application further provides a chip, the chip includes a processor and a communication interface, the communication interface is coupled to the processor, and the processor is configured to run programs or instructions to implement the processes of the above embodiment of the key material sending method or the embodiment of the key material obtaining method or the embodiment of the information transmission method and the same technical effects can be achieved. To avoid repetition, details are not described herein again.

It should be understood that the chip mentioned in this embodiment of this application may also be referred to as a system-level chip, a system chip, a chip system, or an on-chip system chip.

The embodiment of this application also provides a computer program product, the computer program product is stored in a non-volatile storage medium, and the program product is executed by at least one processor to implement the steps of the various methods described above.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A key material sending method, comprising:
receiving, by a first network function, first information, wherein the first information is used to determine a first mapping relationship between a first terminal and a second terminal; and
sending, by the first network function, a key material of the first terminal according to the first mapping relationship;
wherein the key material of the first terminal comprises: security information required by the first terminal for communication.

2. The method according to claim 1, wherein the first information comprises at least one of the following:
a first identifier; wherein the first identifier is a device identifier and/or a user identifier of the first terminal; and
a second identifier; wherein the second identifier is a device identifier and/or a user identifier of the second terminal.

3. The method according to claim 2, wherein if the first information does not comprise the first identifier, the method further comprises:
sending, by the first network function, the first identifier of the first terminal to the first terminal.

4. The method according to claim 1, wherein the method further comprises at least one of the following:
determining, by the first network function according to the first information, that there is the first mapping relationship between the first terminal and the second terminal; and
determining, by the first network function according to a pre-stored mapping relationship and the first information, that there is a first mapping relationship between the first terminal and the second terminal.

5. The method according to claim 1 or 4, wherein the first mapping relationship comprises at least one of the following:
an mapping relationship between a device identifier of the first terminal and a device identifier of the second terminal;
an mapping relationship between a device identifier of the first terminal and a user identifier of the second terminal;
an mapping relationship between a user identifier of the first terminal and a user identifier of the second terminal; and
an mapping relationship between a user identifier of the first terminal and a device identifier of the second terminal.

6. The method according to claim 1, wherein the security information comprises at least one of the following:
a security key;
a security parameter; and
signing credential information.

7. The method according to claim 1, wherein the method further comprises:
deriving, by the first network function, the key material of the first terminal based on a key material of the second terminal;
wherein the key material of the second terminal comprises: security information required by the second terminal for communication.

8. The method according to claim 1, wherein the receiving the first information comprises at least one of the following:
receiving, by the first network function, the first information sent by the first terminal;
receiving, by the first network function, the first information sent by the second terminal;
receiving, by the first network function, the first information sent by a third-party function;
receiving, by the first network function, the first information through a network exposure function; and
receiving, by the first network function, the first information through a non-access stratum message.

9. The method according to claim 1, wherein before the first network function sends the key material of the first terminal, the method further comprises:
sending an inquiry indication to the second terminal; and
receiving an authorization indication sent by the second terminal; and
the sending, by the first network function, the key material of the first terminal comprises:
sending, by the first network function, the key material of the first terminal according to the authorization indication.

10. The method according to claim 1, wherein the sending, by the first network function, the key material of the first terminal comprises any one of the following:
sending, by the first network function, the key material of the first terminal to the first terminal;
sending, by the first network function, the key material of the first terminal to a second terminal, and sending the key material of the first terminal to the first terminal through the second terminal; and
sending, by the first network function, the key material of the first terminal to a third-party function, and sending the key material of the first terminal to the first terminal through the third-party function.

11. The method according to claim 1, wherein the method further comprises at least one of the following:
starting, by the first network function, a first timer, wherein a timing period of the first timer is a valid time of the security information of the first terminal; and after the valid time is exceeded, the security information of the first terminal becomes invalid.

12. The method according to claim 6, wherein the key material further comprises:
a valid time, wherein the valid time is the valid time of the security information.

13. The method according to claim 1, before the first network function sends the key material of the first terminal, further comprising:
receiving, by the first network function, the key material of the first terminal from a second network function.

14. A key material obtaining method, comprising:
receiving, by a first terminal, a key material of a first terminal determined by a first network function, wherein the key material of the first terminal comprises: security information required by the first terminal for communication.

15. The method according to claim 14, wherein the key material of the first terminal is derived from a key material of the second terminal;
wherein the key material of the second terminal comprises: security information required by the second terminal for communication.

16. The method according to claim 14 or 15, wherein the security information comprises at least one of the following:
a security key;
a security parameter; and
signing credential information.

17. The method according to claim 14, wherein before the first terminal receives the key material of the first terminal determined by the first network function, the method further comprises:
sending, by the first terminal, an initial verification message to the third-party function, wherein the initial verification message is used for the third-party function to verify and authorize the first terminal.

18. The method according to claim 17, wherein the initial verification message comprises at least one of the following:
an identifier of the first terminal;
a default credential of the first terminal; and
a network identifier of a local network of the first terminal.

19. The method according to claim 14, wherein the receiving, by the first terminal, the key material of the first terminal determined by the first network function comprises any one of the following:
receiving, by the first terminal, the key material of the first terminal sent by the first network function;
receiving, by the first terminal, the key material of the first terminal sent by the second terminal, wherein the key material of the first terminal is sent to the second terminal by the first network function; and
receiving, by the first terminal, the key material of the first terminal sent by a third-party function, wherein the key material of the first terminal is sent to the third-party function by the first network function.

20. The method according to claim 16, wherein the key material further comprises:
a valid time, wherein the valid time is a valid time of the security information of the first terminal.

21. The method according to claim 20, wherein the method further comprises:
after the valid time is exceeded, sending, by the first terminal, first update indication information to the first network function, wherein the first update indication information is used to indicate the first network function to update the key material of the first terminal.

22. An information transmission method, comprising:
sending, by a second terminal or a third-party function, first information to a first network function, so that after receiving the first information, the first network function determines that there is a first mapping relationship between a first terminal and the second terminal and sends a key material of the first terminal;
wherein the key material of the first terminal comprises: security information required by the first terminal for communication.

23. The method according to claim 22, wherein the first information comprises at least one of the following:
a first identifier; wherein the first identifier is a device identifier and/or a user identifier of the first terminal; and
a second identifier; wherein the second identifier is a device identifier and/or a user identifier of the second terminal.

24. The method according to claim 22, wherein after the second terminal or the third-party function sends the first information to the first network function, the method further comprises:
receiving, by the second terminal or the third-party function, the key material of the first terminal sent by the first network function and determined by the first network function; and
sending, by the second terminal or the third-party function, the key material of the first terminal to the first terminal.

25. The method according to claim 22, wherein the key material of the first terminal is derived from a key material of the second terminal;
wherein the key material of the second terminal comprises: security information required by the second terminal for communication.

26. The method according to claim 22, wherein the method further comprises:
receiving, by the second terminal, an inquiry indication sent by the first network function; and
sending, by the second terminal, an authorization indication to the first network function.

27. The method according to claim 22, wherein before sending the first information to the first network function, the method further comprises:
receiving, by the third-party function, an initial verification message sent by the first terminal, wherein the initial verification message is used for the third-party function to verify and authorize the first terminal.

28. The method according to claim 27, wherein the initial verification message comprises at least one of the following:
an identifier of the first terminal;
a default credential of the first terminal; and
a network identifier of a local network of the first terminal.

29. A key material sending apparatus, comprising:
a first receiving module, configured to receive first information, wherein the first information is used to determine a first mapping relationship between a first terminal and a second terminal; and
a first execution module, configured to send a key material of the first terminal according to the first mapping relationship;
wherein the key material of the first terminal comprises: security information required by the first terminal for communication.

30. A key material obtaining apparatus, comprising:
a second receiving module, configured to receive a key material of a first terminal determined by a first network function, wherein the key material of the first terminal comprises: security information required by the first terminal for communication.

31. An information transmission apparatus, comprising:
a first sending module, configured to send first information to a first network function, so that after receiving the first information, the first network function determines that there is a first mapping relationship between a first terminal and the second terminal and sends a key material of the first terminal;
wherein the key material of the first terminal comprises: security information required by the first terminal for communication.

32. A communication device, comprising a processor, a memory, and a program or an instruction stored on the memory and executable on the processor, wherein when the program or instruction is executed by the processor, the steps in the key material sending method according to any one of claims 1 to 13, or when the program or instruction is executed by the processor, the steps in the key material obtaining method according to any one of claims 14 to 21, or when the program or instruction is executed by the processor, the steps in the information transmission method according to any one of claims 22 to 28 are performed.

33. A readable storage medium, storing a program or an instruction, wherein when the program or instruction is executed by a processor, the steps in the key material sending method according to any one of claims 1 to 13, or the steps in the key material obtaining method according to any one of claims 14 to 21, or the steps in the information transmission method according to any one of claims 22 to 28 are performed.

34. A chip, wherein the chip comprises a processor and a communication interface, the communication interface is coupled to the processor, and the processor is configured to run programs or instructions, to perform the steps in the key material sending method according to any one of claims 1 to 13, or the steps in the key material obtaining method according to any one of claims 14 to 21, or the steps in the information transmission method according to any one of claims 22 to 28.

35. A computer program product, wherein the computer program product is stored in a non-transitory readable storage medium, and the computer program product is executed by at least one processor to implement the steps in the key material sending method according to any one of claims 1 to 13, or the steps in the key material obtaining method according to any one of claims 14 to 21, or the steps in the information transmission method according to any one of claims 22 to 28.

36. A communication device, configured to execute the steps in the key material sending method according to any one of claims 1 to 13, or the steps in the key material obtaining method according to any one of claims 14 to 21, or the steps in the information transmission method according to any one of claims 22 to 28.
